(19) Europäisches Patentamt
European Patent Office
Office européen des brevets

(11) EP 3 467 801 A1

## (12) EUROPEAN PATENT APPLICATION

(43) Date of publication:
10.04.2019 Bulletin 2019/15

(51) Int Cl.:
*G08G 1/0967* (2006.01)     *G08G 1/0962* (2006.01)
*G06K 9/00* (2006.01)

(21) Application number: 17195264.1

(22) Date of filing: 06.10.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: Continental Automotive GmbH
30165 Hannover (DE)

(72) Inventors:
• Acervo, Gladys
Yokohama-shi, 2340054 (JP)

• Adomat, Rolf
88097 Eriskirch (DE)
• David, King Elvis
Yokohama-shi, 231-0843 (JP)
• Ishikawa, Kenji
Kawagoe, 350-0806 (JP)
• Qu, Tong
PRC/Chaoyang District, Beijing 100015 (CN)

(74) Representative: Bobbert, Christiana
Conti Temic microelectronic GmbH
Intellectual Property
Sieboldstrasse 19
90411 Nürnberg (DE)

## (54) DRIVER ASSISTANCE SYSTEM, VEHICLE, AND DISTANCE CONTROL METHOD

(57) The invention relates to a driver assistance system (1) for an ego vehicle (2), comprising: an interface (11) which is adapted to receive camera data acquired by a camera device (21) of the ego vehicle (2), sensor data acquired by a sensor device (22) of the ego vehicle (2), and navigation data acquired by a navigation system (23) of the ego vehicle (2); a computing device (12) which is adapted to determine a distance to at least one further vehicle (3, 31, 32) in a surrounding of the ego vehicle (2) based on the sensor data, determine a height of the at least one further vehicle (3, 31, 32) based on the camera data, determine a position and a height above ground of a traffic light (4) based on the navigation data, and compute a minimal distance (X_ACC) between the ego vehicle (2) and the further vehicle (3, 31) directly adjacent to the ego vehicle (2) which is required to establish visual contact between the camera device (21) of the ego vehicle (2) and the traffic light (4), depending on the determined distance and height of the at least one further vehicle (3, 31, 32) and on the position and height of the traffic light (4); and a control device (13) which is adapted to control the ego vehicle (2) in such a way that the distance between the ego vehicle (2) and the further vehicle (3, 31) directly adjacent to the ego vehicle (2) is equal to or larger than the computed minimal distance (X_ACC).

FIG 5

**Description**

The invention relates to a driver assistance system for a vehicle, a vehicle and a distance control method. The invention particularly relates to a driver assistance system which provides autonomous cruise control (ACC), and more particularly a driver assistance system for controlling the distance between the ego vehicle and a further vehicle in a surrounding of the ego vehicle.

Autonomous cruise control (ACC) systems can assist the driver to keep a certain distance to a vehicle ahead. In addition to increasing the comfort of the driver, such systems can increase the safety by avoiding collisions.

For example, a vehicle speed control system is known from document US 5901806 A which provides means for adjusting the speed of the vehicle based on an input of the driver, the actual speed of the vehicle and a distance from a forward vehicle.

ACC systems rely on the exact knowledge of the distance between the controlled vehicle (in the following denoted as "ego vehicle") and the further vehicle in front of the controlled vehicle. The distance is usually computed based on radar data or lidar data but can also be obtained from other sensors, such as camera devices or infrared sensors.

To provide autonomous or semi-autonomous driving functions, a vast amount of information relating to the environment of the vehicle must be taken into account. For instance, lane detection methods are known which allow the prediction of the future course of the road. Further, road signs and traffic lights provide useful information for controlling the vehicle. For instance, it is crucial that the vehicle stops at a red traffic light. The status of the traffic light, i.e., whether the traffic light is green, orange or red, must be identified as early as possible.

Often, high vehicles, such as trucks, may impede the detection of traffic lights. If the distance between the ego vehicle and a high vehicle in front of the ego vehicle is too low, the high vehicle may prevent visual contact between a camera of the ego vehicle and the traffic lights. In such a situation, the traffic lights can only be detected based on camera data at a relatively late time. Consequently, it can happen that the ego vehicle is forced to perform an unnecessarily strong breaking maneuver.

In view of the above, it is therefore an object of the present invention to provide a way to detect traffic lights already at an early stage.

In accordance with the invention, a driver assistance system as recited in claim 1 is provided. Further, the invention provides a vehicle as recited in claim 8, and a distance control method as recited in claim 10. Various preferred features of the invention are recited in the dependent claims.

According to one aspect, therefore, the invention provides a driver assistance system for an ego vehicle which comprises an interface which is adapted to receive camera data acquired by a camera device of the ego vehicle, sensor data acquired by a sensor device of the ego vehicle, and navigation data acquired by a navigation system of the ego vehicle. The driver assistance system further comprises a computing device which is adapted to determine a distance to at least one further vehicle in a surrounding of the ego vehicle based on the sensor data. The computing device determines a height of the at least one further vehicle based on the camera data and determines a position and a height above ground of a traffic light based on the navigation data. The computing device further computes a minimal distance between the ego vehicle and the further vehicle directly adjacent to the ego vehicle which is required to establish visual contact between the camera device of the ego vehicle and the traffic light, depending on the determined distance and height of the at least one further vehicle and on the position and height of the traffic light. The driver assistance system further comprises a control device which is adapted to control the ego vehicle in such a way that the distance between the ego vehicle and the further vehicle directly adjacent to the ego vehicle is equal to or larger than the computed minimal distance.

According to a second aspect, therefore, the invention provides a vehicle which comprises a camera device adapted to acquire camera data, a sensor device adapted to acquire sensor data, and a navigation system adapted to acquire navigation data. The vehicle further comprises a driver assistance system which is adapted to control the vehicle based on the camera data, sensor data and navigation data.

According to a third aspect, the invention provides a distance control method for an ego vehicle, wherein a distance to at least one further vehicle in a surrounding of the ego vehicle is determined based on sensor data acquired by a sensor device of the ego vehicle. A height of the at least one further vehicle is determined based on camera data acquired by a camera device of the ego vehicle. A position and a height above ground of a traffic light is determined based on navigation data acquired by a navigation system of the ego vehicle. A minimal distance between the ego vehicle and the further vehicle directly adjacent to the ego vehicle is computed, which is required to establish visual contact between the camera device of the ego vehicle and the traffic light. The computation depends on the determined distance and height of the at least one further vehicle and on the position and height of the traffic light. Further, the ego vehicle is controlled in such a way that the distance between the ego vehicle and the further vehicle directly adjacent to the ego vehicle is equal to or larger than the computed minimal distance.

The invention provides an automatic and dynamical adjustment of the distance between the ego vehicle and a further vehicle ahead. The distance is adjusted such that the camera device can at all times establish visual contact to the traffic light. Even if a high vehicle is driving ahead, the status of the traffic light can always be established as early as possible. Late breaking and possible collisions can be avoided. The invention therefore increases the safety of all road users and increases the quality of semi-autonomous and autonomous driving functions.

Preferably, the further vehicles in a surrounding of the ego vehicle comprise all vehicles in front of the ego vehicle. The further vehicle directly adjacent to the ego vehicle corresponds in this case to the further vehicle directly in front of the vehicle.

However, the further vehicles in a surrounding of the ego vehicle may also comprise all vehicles in a lateral position with respect to the ego vehicle. The further vehicle directly adjacent to the ego vehicle corresponds in this case to the further vehicle directly laterally positioned to the vehicle.

According to a possible embodiment, the computing device is adapted to compute the minimal distance based on the intercept theorem.

According to a further embodiment, the computing device computes the minimal distance further based on a predetermined position and height above ground of the camera device. The computing device may compute the minimal distance by multiplying the distance between the camera device and the traffic light with the quotient of the height of the further vehicle minus the height of the camera device and the height of the traffic light minus the height of the camera device and by further subtracting the distance between the camera device and the front of the ego vehicle.

According to a further embodiment, the computing device is adapted to determine the most-obstructing further vehicle of the at least one further vehicle which is most likely to obstruct visual contact between the camera device and the traffic light. The computing device computes the minimal distance based on a distance between the most-obstructing further vehicle and the further vehicle directly adjacent to the ego vehicle. The driver assistance system can therefore take into account not only vehicles directly in front of the ego vehicle but also more distant vehicles which may also obstruct the view of the camera.

According to a further embodiment, the driver assistance system further comprises a warning device which is adapted to output a warning signal if the distance between the ego vehicle and the further vehicle directly adjacent to the ego vehicle is smaller than the computed minimal distance. For example, if a high truck changes lane right in front of the ego vehicle, visual contact between the camera device and the traffic light is suddenly obstructed. The warning signal can inform the driver that currently the status of the traffic sign cannot be determined based on camera data. The warning sign can for instance be an optical or acoustical signal. The driver assistance system slowly decelerates the vehicle until the distance between the ego vehicle and the further vehicle is no longer smaller than the minimal distance. At this point, the warning signal may be turned off again.

According to a further embodiment, the sensor data comprises radar data acquired by a radar sensor of the ego vehicle. In addition or alternatively, the sensor data may comprise lidar data acquired by a lidar sensor of the ego vehicle.

According to a further embodiment, the computing device is further adapted to determine a status of the traffic light based on the camera data. The control device is further adapted to control the vehicle based on the determined status of the traffic light. The status of the traffic light refers to the type of signal emitted by the traffic light. For instance, if the traffic light switches between a red light, an orange light and a green light, the status of the traffic light refers to the current color.

According to a further embodiment of the vehicle, the sensor device comprises a radar device and/or a lidar device.

According to a further embodiment of the method, the minimal distance is computed based on the intercept theorem.

According to a further embodiment of the method, the minimal distance is computed further based on a predetermined position and height above ground of the camera device.

According to a further embodiment of the method, the most-obstructing further vehicle is determined which is most likely to obstruct visual contact between the camera device and the traffic light. The minimal distance is further computed based on a distance between the most-obstructing further vehicle and the further vehicle directly adjacent to the ego vehicle.

According to a further embodiment of the method, a warning signal is outputted if the distance between the ego vehicle and the further vehicle directly in front of the ego vehicle is smaller than the computed minimal distance.

According to a further embodiment of the method, a status of the traffic light is determined based on the camera data. The vehicle is further controlled based on the determined status of the traffic light.

For a more complete understanding of the invention and the advantages thereof, exemplary embodiments of the invention are explained in more detail in the following description with reference to the accompanying drawing figures, in which like reference characters designate like parts and in which:

Fig. 1    shows a block diagram of a driver assistance system according to an embodiment of the invention;

Fig. 2    shows a first traffic scenario where the distance is smaller than the minimal distance;

Fig. 3    shows a second traffic scenario where the distance is equal to the minimal distance;

Fig. 4    shows a third traffic scenario where the distance is smaller than the minimal distance;

Fig. 5    shows a fourth traffic scenario where the distance is equal to the minimal distance;

Fig. 6    shows a block diagram of a vehicle according to an embodiment of the invention; and

Fig. 7    shows a flowchart of a distance control method according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

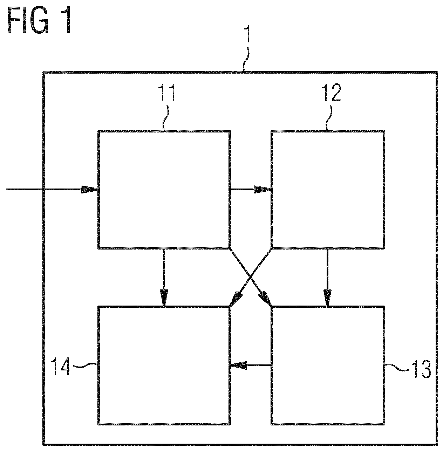

Figure 1 depicts a block diagram of a driver assistance system 1 for an ego vehicle according to an embodiment of the invention. The driver assistance system 1 comprises an interface 11 which is connected to a camera device of the ego vehicle, a sensor device of the ego vehicle and a navigation system of the ego vehicle. The sensor device may comprise a radar device and/or a lidar device. The connection may be a wireless and/or a wired connection.

The driver assistance system 1 further comprises a computing device 12 which is adapted to further evaluate camera data acquired by the camera device of the ego vehicle, sensor data acquired by the sensor device of the ego vehicle, and navigation data acquired by the navigation system of the ego vehicle, which have been received via the interface 11. The computing device 12 may comprise at least one central processing unit (CPU).

The computing device 12 analyzes the sensor data to determine distances to further vehicles in front of the ego vehicle. According to an embodiment, the computing device 12 computes only the distance to the further vehicle directly in front of the ego vehicle. However, the invention is not restricted to this embodiment. Preferably, distances to a plurality of further vehicles in front of the ego vehicle are computed. For this invention, a further vehicle will be considered to be in front of the ego vehicle if it is located somewhere in the driving direction of the ego vehicle and may possibly obstruct the view of a camera arranged on a front side of the ego vehicle.

The computing device 12 further determines a height of the at least one further vehicle based on the camera data. The computing device 12 may also take the determined distance of the at least one further vehicle into account. The height of the at least one further vehicle may be inferred from the dimensions of the further vehicle in a camera image if the distance of the further vehicle from the camera is known.

The computing device 12 further determines the position and a height above ground of a traffic light in a surrounding of the ego vehicle. According to this invention, the height above ground of a traffic light is measured from a lowermost light signal of the traffic light, i.e., such that all light signals are located higher than the height above ground.

The computing device 12 may obtain the present location of the ego vehicle from the navigation data as well as the exact coordinates of all traffic lights lying ahead on the course of the ego vehicle. The height of the traffic lights may also be part of the navigation data. If the height of the traffic lights is not explicitly known, the computing device 12 may assume that the height of the traffic lights corresponds to a predetermined general height. The predetermined general height may be determined based on a height set by regulations of the respective country, wherein the country can be determined from the navigation data.

The computing device 12 computes a minimal distance x_ACC which is required to establish visual contact between the camera device of the vehicle and the traffic control signal.

The driver assistance system 1 further comprises a control device 13 which is adapted to control the ego vehicle, for instance by changing the speed of the ego vehicle or by steering the ego vehicle. The control device 13 performs the control of the ego vehicle in such a way that the distance between the ego vehicle and the further vehicle directly in front of the ego vehicle is equal to or larger than the computed minimal distance.

The driver assistance system 1 optionally further comprises a warning device 14 which emits a warning signal if the distance between the ego vehicle and the further vehicle directly in front of the ego vehicle is smaller than the minimal distance.

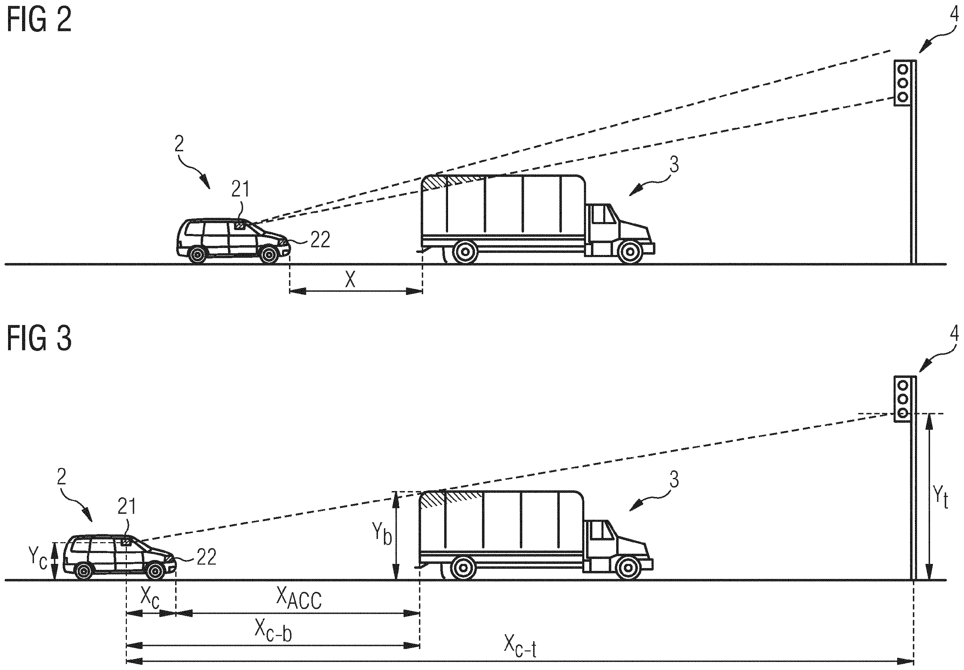

A first traffic scenario is illustrated in figure 2. A single further vehicle 3 drives in front of the ego vehicle 2. The distance X is too small such that the camera sensor 21 of the ego vehicle 2 cannot see the traffic light for ahead of the ego vehicle 2.

The computing device 12 therefore computes the minimal distance X_ACC by multiplying the distance X_c-t between the camera device 21 and the traffic light 4 with the quotient of the height Y_b of the further vehicle 3 minus the height Y_c of the camera device 21 and the height Y_t of the traffic light 4 minus the height Y_c of the camera device 21, and by further subtracting the distance X_c between the camera device 21 and the front of the ego vehicle 2, i.e., according to the following formulas:

$$X_{c-b} \geq \frac{X_{c-t} \cdot (Y_b - Y_c)}{Y_t - Y_c}$$

$$X_{ACC} = X_{c-b} - X_c$$

If the control device 13 controls the ego vehicle 2 such that the distance between the ego vehicle 2 and the further vehicle 3 is exactly equal to the minimal distance X_ACC, the camera device 21 can establish visual contact to the traffic light 4, as in a second traffic scenario depicted in figure 3.

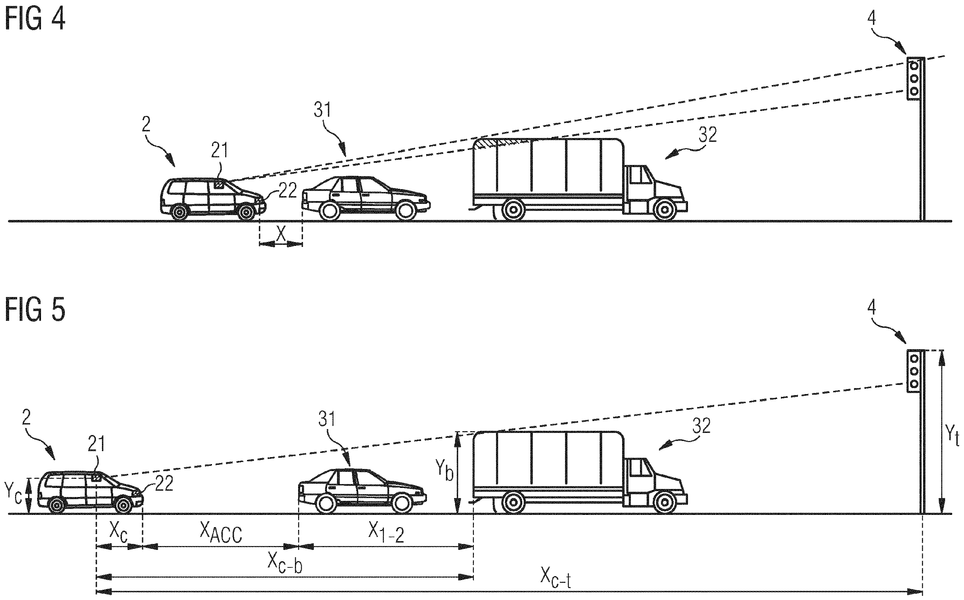

Figure 4 shows a third traffic scenario. In this case, two further vehicles 31, 32 are driving ahead of the ego vehicle 2. A high truck 32 which is not directly in front of the ego vehicle 2 nevertheless obstructs visual connection between the camera device 21 and the traffic light 4. The truck 32 therefore is the most-obstructing further vehicle.

In this case, the computing device 12 computes the minimal distance X_ACC by further subtracting the distance X_1-2 between the rear portion of the truck 32 and the rear portion of the further vehicle 31 directly in front of the vehicle 2 i.e., according to the following formulas:

$$X_{c-b} \geq \frac{X_{c-t} \cdot (Y_b - Y_c)}{Y_t - Y_c}$$

$$X_{ACC} = X_{c-b} - X_c - X_{1-2}$$

If the distance between the ego vehicle 2 and the vehicles 31 directly in front of the ego vehicle 2 is controlled to be equal to the minimal distance X_ACC, the traffic light 4 can again be seen by the vehicle camera 21, as shown in the fourth traffic scenario in figure 5.

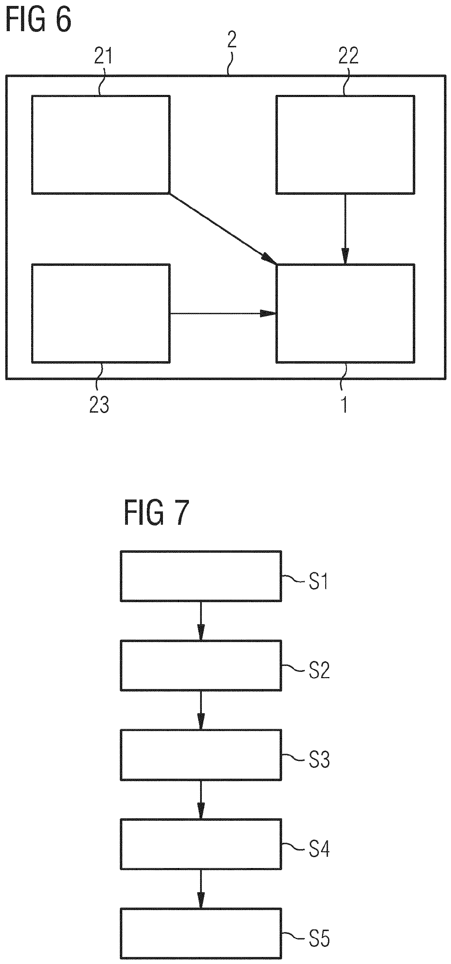

Figure 6 shows a block diagram of an ego vehicle 2 according to an embodiment of the invention. The ego vehicle 2 comprises a camera device 21 which is adapted to acquire camera data, and a sensor device 22 which is adapted to acquire sensor data. The sensor device 22 comprises a radar sensor and/or a lidar sensor. Based on sensor data, a distance between the ego vehicle 2 and further vehicles 3, 31, 32 can be determined. The ego vehicle 2 further comprises a navigation system 23 for acquiring navigation data such as a current position of the ego vehicle 2 and the positions and heights of traffic lights 4 along the course of the ego vehicle 2. The ego vehicle 2 further comprises a driver assistance system 1 according to one of the embodiments disclosed above. The driver assistance system 1 is adapted to control the ego vehicle 2 based on the acquired camera data, sensor data and navigation data, as described above.

Figure 7 shows a flow diagram illustrating a distance control method for an ego vehicle 2.

In a first method step S1, distances between the ego vehicle 2 and at least one further vehicles 3, 31, 32 are determined based on sensor data, such as radar data and lidar data.

In step S2, a height of the at least one further vehicle 3, 31, 32 is determined based on camera data acquired by a camera device 21 of the ego vehicle 2.

In step S3, a position and a height above ground of a traffic light 4 in the surrounding of the ego vehicle 2 is determined based on navigation data, the navigation data being acquired by a navigation system 23 of the ego vehicle 2.

In step S4, a minimal distance x_ACC is computed between the ego vehicle 2 and the further vehicle 3, 31 directly in front of the ego vehicle 2. The minimal distance x_ACC is determined is such a way that visual contact between the camera device 21 and the traffic light 4 is always established.

In step S5, the ego vehicle 2 is controlled in such a way that the distance between the ego vehicle 2 and the further vehicle 3, 31 directly in front of the ego vehicle 2 is equal to or larger than the computed minimal distance X_ACC. The ego vehicle 2 may be steered, accelerated or decelerated based on the current distance and the computed minimal distance X_ACC.

REFERENCE SIGNS

| | |
|---|---|
| 1 | driver assistance system |
| 2 | ego vehicle |
| 3 | further vehicle |
| 4 | traffic light |
| 11 | interface |
| 12 | computing device |
| 13 | control device |
| 21 | camera device |
| 22 | sensor device |
| 23 | navigation system |
| 31 | further vehicle |
| 32 | further vehicle |

**Claims**

1. A driver assistance system (1) for an ego vehicle (2), comprising:

an interface (11) which is adapted to receive camera data acquired by a camera device (21) of the ego vehicle (2), sensor data acquired by a sensor device (22) of the ego vehicle (2), and navigation data acquired by a navigation system (23) of the ego vehicle (2);
a computing device (12) which is adapted to

- determine a distance to at least one further vehicle (3, 31, 32) in a surrounding of the ego vehicle (2) based on the sensor data,
- determine a height of the at least one further vehicle (3, 31, 32) based on the camera data,
- determine a position and a height above ground of a traffic light (4) based on the navigation data, and
- compute a minimal distance (X_ACC) between the ego vehicle (2) and the further vehicle (3, 31) directly adjacent of the ego vehicle (2) which is required to establish visual contact between the camera device (21) of the ego vehicle (2) and the traffic light (4), depending on the determined distance and height of the at least one further vehicle (3, 31, 32) and on the position and height of the traffic light (4); and

a control device (13) which is adapted to control the ego vehicle (2) in such a way that the distance between the ego vehicle (2) and the further vehicle (3, 31) directly adjacent to the ego vehicle (2) is equal to or larger than the computed minimal distance (X_ACC).

2. The driver assistance system (1) according to claim 1, wherein the computing device (12) is adapted to compute the minimal distance (X_ACC) based on the intercept theorem.

3. The driver assistance system (1) according to claim 1 or 2, wherein the computing device (12) computes the minimal distance (X_ACC) further based on a predetermined position and height above ground of the camera device (21).

4. The driver assistance system (1) according to any of the preceding claims, wherein the computing device (12) is adapted to determine the most-obstructing further vehicle (32) of the at least one further vehicle (31, 32) which is most likely to obstruct visual contact between the camera device (21) and the traffic light (4), and to further compute the minimal distance (X_ACC) based on a distance between the most-obstructing further vehicle (32) and the further vehicle (31) directly adjacent to the ego vehicle (2).

5. The driver assistance system (1) according to any of the preceding claims, further comprising a warning device (14) which is adapted to output a warning signal if the distance between the ego vehicle (2) and the further vehicle (3, 31) directly adjacent to the ego vehicle (2) is smaller than the computed minimal distance (X_ACC).

6. The driver assistance system (1) according to any of the preceding claims, wherein the sensor data comprises radar data acquired by a radar sensor of the ego vehicle (2) and/or lidar data acquired by a lidar sensor of the ego vehicle (2).

7. The driver assistance system (1) according to any of the preceding claims, wherein the computing device (12) is further adapted to determine a status of the traffic light (4) based on the camera data, and wherein the control device (13) is further adapted to control the vehicle based on the determined status of the traffic light (4).

8. A vehicle (2) comprising:

a camera device (21) adapted to acquire camera data;
a sensor device (22) adapted to acquire sensor data;
a navigation system (23) adapted to acquire navigation data; and
a driver assistance system (1) according to any of the preceding claims.

9. The vehicle according to claim 8, wherein the sensor device (22) comprises a radar device and/or a lidar device.

10. Distance control method for an ego vehicle (2), comprising the steps:

determining a distance to at least one further vehicle (3, 31, 32) in a surrounding of the ego vehicle (2) based on sensor data acquired by a sensor device (22) of the ego vehicle (2);
determining a height of the at least one further vehicle (3, 31, 32) based on camera data acquired by a camera device (21) of the ego vehicle (2);
determining a position and a height above ground of a traffic light (4) based on navigation data acquired by a navigation system (23) of the ego vehicle (2);
computing a minimal distance (X_ACC) between the ego vehicle (2) and the further vehicle (3, 31) directly adjacent to the ego vehicle (2) which is required to establish visual contact between the camera device (21) of the ego vehicle (2) and the traffic light (4), depending on the determined distance and height of the at least one further vehicle (3, 31, 32) and on the position and height of the traffic light (4); and
controlling the ego vehicle (2) in such a way that the distance between the ego vehicle (2) and the further vehicle (3, 31) directly adjacent to the ego vehicle (2) is equal to or larger than the computed minimal distance (X_ACC).

11. The method according to claim 10, wherein the minimal distance (X_ACC) is computed based on the intercept theorem.

12. The method according to claim 10 or 11, wherein the minimal distance (X_ACC) is computed further based on a predetermined position and height above ground of the camera device (21).

13. The method according to any of claims 10 to 12, further comprising determining the most-obstructing further vehicle (3, 31, 32) of the at least one further vehicle (3, 31, 32) which is most likely to obstruct visual contact between the camera device (21) and the traffic light (4), wherein the minimal distance (X_ACC) is further computed based on a distance between the most-obstructing further vehicle (3, 31, 32) and the further vehicle (3, 31) directly adjacent to the ego vehicle (2).

14. The method according to any of claims 10 to 13, wherein a warning signal is outputted if the distance between the ego vehicle (2) and the further vehicle (3, 31) directly adjacent to the ego vehicle (2) is smaller than the computed minimal distance (X_ACC).

15. The method according to any of claims 10 to 14, further comprising determining a status of the traffic light (4) based on the camera data, and wherein controlling the vehicle is further based on the determined status of the traffic light (4).

FIG 1

FIG 2

FIG 3

EP 3 467 801 A1

FIG 4

FIG 5

FIG 6

FIG 7

Europäisches
Patentamt

European
Patent Office

Office européen
des brevets

# EUROPEAN SEARCH REPORT

Application Number

EP 17 19 5264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 049933 A (AISIN AW CO) 11 April 2016 (2016-04-11) * paragraphs [0003] - [0004], [0014] - [0017], [0022], [0027] - [0031], [0038], [0045] - [0048], [0075] - [0080]; figure 10 * ----- | 1-15 | INV. G08G1/0967 G08G1/0962 G06K9/00 |
| X | JP 2013 184664 A (NISSAN MOTOR) 19 September 2013 (2013-09-19) * paragraph [0015] - paragraph [0049]; figure 5 * ----- | 1-15 | |
| X | JP 2009 001245 A (HITACHI LTD) 8 January 2009 (2009-01-08) * paragraph [0057] - paragraph [0059]; figure 5 * ----- | 1-15 | |
| X | JP 2004 301833 A (NISSAN MOTOR) 28 October 2004 (2004-10-28) * paragraph [0020] - paragraph [0034]; figure 3 * ----- | 1-6,8-15 | |
| A | JP 2007 320458 A (TOYOTA MOTOR CORP) 13 December 2007 (2007-12-13) * paragraph [0003] - paragraph [0005]; figures 2-4 * ----- | 1-15 | TECHNICAL FIELDS SEARCHED (IPC) G08G G06K |
| A | US 2017/160743 A1 (SCHWEIKL JOHANN [DE]) 8 June 2017 (2017-06-08) * the whole document * ----- | 1-15 | |

The present search report has been drawn up for all claims

| Place of search | Date of completion of the search | Examiner |
|---|---|---|
| The Hague | 12 April 2018 | Malagoli, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 5264

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2018

| Patent document cited in search report | | Publication date | Patent family member(s) | | Publication date |
|---|---|---|---|---|---|
| JP 2016049933 | A | 11-04-2016 | NONE | | |
| JP 2013184664 | A | 19-09-2013 | JP 5990941 B2 | | 14-09-2016 |
| | | | JP 2013184664 A | | 19-09-2013 |
| JP 2009001245 | A | 08-01-2009 | JP 4852482 B2 | | 11-01-2012 |
| | | | JP 2009001245 A | | 08-01-2009 |
| JP 2004301833 | A | 28-10-2004 | NONE | | |
| JP 2007320458 | A | 13-12-2007 | NONE | | |
| US 2017160743 | A1 | 08-06-2017 | CN 106816021 A | | 09-06-2017 |
| | | | DE 102015224112 A1 | | 08-06-2017 |
| | | | US 2017160743 A1 | | 08-06-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5901806 A